(19) Europäisches Patentamt
European Patent Office
Office européen des brevets

(11) EP 3 355 303 A1

## (12) EUROPEAN PATENT APPLICATION

(43) Date of publication:
01.08.2018 Bulletin 2018/31

(51) Int Cl.:
G10L 15/08 (2006.01)

(21) Application number: 17206914.8

(22) Date of filing: 13.12.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(30) Priority: 26.01.2017 KR 20170012354

(71) Applicant: Samsung Electronics Co., Ltd.
Gyeonggi-do 16677 (KR)

(72) Inventors:
• MUN, Minyoung
16678 Gyeonggi-do (KR)
• LEE, Hoshik
16678 Gyeonggi-do (KR)
• CHOI, Young Sang
16678 Gyeonggi-do (KR)

(74) Representative: Grootscholten, Johannes A.M. et al
Arnold & Siedsma
Bezuidenhoutseweg 57
2594 AC The Hague (NL)

## (54) SPEECH RECOGNITION METHOD AND APPARATUS

(57) A speech recognition method includes generating pieces of candidate text data from a speech signal of a user, determining a decoding condition corresponding to an utterance type of the user, and determining target text data among the pieces of candidate text data by performing decoding based on the determined decoding condition.

# FIG. 1

**Description**

The following description relates to a speech recognition method and apparatus.

Speech recognition is technology for recognizing a voice or speech of a user. A speech of a user may be converted to a text through the speech recognition. In the speech recognition, accuracy in recognizing the speech is affected by various factors, such as, for example, a surrounding environment where the user utters the speech and a current state of the user.

A speech recognition system may receive a speech signal as an input, and generate a most plausible sentence corresponding to the received speech signal. The speech recognition system may broadly include three modules including an acoustic model, a language model, and a decoder. The acoustic model may receive a speech signal as an input, and output a phoneme or a subphoneme probability vector of the received speech signal. A traditional technology for generating such an acoustic model may use a Gaussian mixture model (GMM). In addition, such technology as a deep neural network (DNN) and a bidirectional long short-term memory (BLSTM) have been applied recently to improve the performance of speech recognition greatly.

The language model may determine a probability of a sentence by referring to a list of words included in the sentence, and a most plausible sentence may have a highest probability. An n-gram language model configured to determine a probability of a word based on preceding n-1 word sequences may be a representative example of the language model. In addition, a neural network-based language model has been used along with the n-gram language model to help improve the performance of speech recognition.

The decoder may search for candidate word sequences (or sentences) corresponding to a phoneme sequence output through the acoustic model based on a hidden Markov model (HMM) dictionary (including phoneme sequence information of each word) and the language model, and output a sentence having a highest probability. Here, a difference in the performance may be determined based on how much weight is provided to which one of the acoustic model and the language model.

Thus, in related arts, conventional methods may require an optimization process through which many parameters, for example, a type of speech to be recognized, a weight of the acoustic model or the language model based on an environment, and a decoding window size, are optimized in order to achieve an optimal performance.

Related arts may have limitations as follows:

First, in a case that there is a plurality of utterance types as a target, a decoding parameter that maximizes performance may not be used for each utterance type, and thus a mean parameter that compensates for the performance corresponding to each utterance type may be used.

Second, an acoustic model that operates suitably for each utterance type may be configured, and the configured n acoustic models may need to be trained, and thus different models may be loaded and used based on the utterance types. However, in the loading performed by changing the models, a delay may occur and also a system may become heavier to maintain the various models.

SUMMARY

This Summary is provided to introduce a selection of concepts in a simplified form that are further described below in the Detailed Description. This Summary is not intended to identify key features or essential features of the claimed subject matter, nor is this Summary intended to be used as an aid in determining the scope of the claimed subject matter.

In one general aspect, a speech recognition method includes generating pieces of candidate text data from a speech signal of a user; determining a decoding condition corresponding to an utterance type of the user; and determining target text data among the pieces of candidate text data by performing decoding based on the determined decoding condition.

In a preferred embodiment, the speech recognition method may further include determining the utterance type based on any one or any combination of any two or more of a feature of the speech signal, context information, and a speech recognition result from a recognition section of the speech signal.

In a preferred embodiment, the context information may include any one or any combination of any two or more of user location information, user profile information, and application type information of an application executed in a user device.

In a preferred embodiment, the determining of the decoding condition may include selecting, in response to the utterance type being determined, a decoding condition mapped to the determined utterance type from mapping information including utterance types and corresponding decoding conditions respectively mapped to the utterance types.

In a preferred embodiment, the determining of the target text data may include changing a current decoding condition to the determined decoding condition; calculating a probability of each of the pieces of candidate text data based on the determined decoding condition; and determining the target text data among the pieces of candidate text data based on the calculated probabilities.

In a preferred embodiment, the determining of the target text data may include adjusting either one or both of a weight of an acoustic model and a weight of a language model based on the determined decoding condition; and determining the target text data by performing the decoding based on either one or both of the weight of the acoustic model and the weight of the language model.

In a preferred embodiment, the generating of the pieces of candidate text data may include determining a phoneme sequence from the speech signal based on an acoustic model; recognizing words from the determined phoneme sequence based on a language model; and generating the pieces of candidate text data based on the recognized words.

In a preferred embodiment, the acoustic model may include a classifier configured to determine the utterance type based on a feature of the speech signal.

In a preferred embodiment, the decoding condition may include any one or any combination of any two or more of a weight of an acoustic model, a weight of a language model, a scaling factor associated with a dependency on a phonetic symbol distribution, a cepstral mean and variance normalization (CMVN), and a decoding window size.

In another general aspect, a non-transitory computer-readable medium stores instructions that, when executed by a processor, cause the processor to perform the method described above.

In another general aspect a speech recognition apparatus includes a processor; and a memory configured to store instructions executable by the processor; wherein, in response to executing the instructions, the processor is configured to generate pieces of candidate text data from a speech signal of a user, determine a decoding condition corresponding to an utterance type of the user, and determine target text data among the pieces of candidate text data by performing decoding based on the determined decoding condition.

In a preferred embodiment, the processor may be further configured to determine the utterance type based on any one or any combination of any two or more of a feature of the speech signal, context information, and a speech recognition result from a recognition section of the speech signal.

In a preferred embodiment, the context information may include any one or any combination of any two or more of user location information, user profile information, and application type information of an application executed in a user device.

In a preferred embodiment, the processor may be further configured to select, in response to the utterance type being determined, a decoding condition mapped to the determined utterance type from mapping information including utterance types and corresponding decoding conditions respectively mapped to the utterance types.

In a preferred embodiment, the processor may be further configured to change a current decoding condition to the determined decoding condition, calculate a probability of each of the pieces of candidate text data based on the determined decoding condition, and determine the target text data among the pieces of candidate text data based on the calculated probabilities.

In a preferred embodiment, the processor may be further configured to adjust either one or both of a weight of an acoustic model and a weight of a language model based on the determined decoding condition; and determine the target text data by performing the decoding based on either one or both of the weight of the acoustic model and the weight of the language model.

In a preferred embodiment, the processor may be further configured to determine a phoneme sequence from the speech signal based on an acoustic model, recognize words from the phoneme sequence based on a language model, and generate the pieces of candidate text data based on the recognized words.

In a preferred embodiment, the acoustic model may include a classifier configured to determine the utterance type based on a feature of the speech signal.

In a preferred embodiment, the decoding condition may include any one or any combination of any two or more of a weight of an acoustic model, a weight of a language model, a scaling factor associated with a dependency on a phonetic symbol distribution, a cepstral mean and variance normalization (CMVN), and a decoding window size.

In another general aspect, a speech recognition method includes receiving a speech signal of a user; determining an utterance type of the user based on the speech signal; and recognizing text data from the speech signal based on predetermined information corresponding to the determined utterance type.

In a preferred embodiment, the speech recognition method may further include selecting the predetermined information from mapping information including utterance types and corresponding predetermined information respectively matched to the utterance types.

In a preferred embodiment, the predetermined information may include at least one decoding parameter; and the recognizing of the text data may include generating pieces of candidate text data from the speech signal; performing decoding on the pieces of candidate text data based on the at least one decoding parameter corresponding to the determined utterance type; and selecting one of the pieces of candidate text data as the recognized text based on results of the decoding.

In a preferred embodiment, the generating of the pieces of candidate text data may include generating a phoneme sequence from the speech signal based on an acoustic model; and generating the pieces of candidate text data by recognizing words from the phoneme sequence based on a language model.

In a preferred embodiment, the at least one decoding parameter may include any one or any combination of any two or more of a weight of the acoustic model, a weight of the language model, a scaling factor associated with a dependency on a phonetic symbol distribution, a cepstral mean and variance normalization (CMVN), and a decoding window size.

In a preferred embodiment, the acoustic model may generate a phoneme probability vector; the language model may generate a word probability; and the performing of the decoding may include performing the decoding on the pieces of candidate text data based on the phoneme probability vector, the word probability, and the at least one decoding parameter corresponding to the determined utterance type.

In a preferred embodiment, the recognizing of the text data may include recognizing text data from a current recognition section of the speech signal based on the predetermined information corresponding to the determined utterance type; and the determining of the utterance type of the user may include determining the utterance type of the user based on text data previously recognized from a previous recognition section of the speech signal.

Other features and aspects will be apparent from the following detailed description, the drawings, and the claims.

BRIEF DESCRIPTION OF THE DRAWINGS

FIG. 1 is a diagram illustrating an example of a speech recognition apparatus.

FIG. 2 is a diagram illustrating an example of a classifier.

FIGS. 3 through 5 are diagrams illustrating examples of an operation of a speech recognition apparatus.

FIG. 6 is a diagram illustrating an example of a neural network.

FIG. 7 is a diagram illustrating another example of a speech recognition apparatus.

FIG. 8 is a flowchart illustrating an example of a speech recognition method.

FIG. 9 is a diagram illustrating an example of a natural language processing system including a speech recognition apparatus.

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Terms such as first, second, A, B, (a), and (b) may be used herein to describe components. However, such terms are not used to define an essence, order, or sequence of a corresponding component, but are used merely to distinguish the corresponding component from other components. For example, a component referred to as a first component may be referred to instead as a second component, and another component referred to as a second component may be referred to instead as a first component.

If the specification states that one component is "connected," "coupled," or "joined" to a second component, the first component may be directly "connected," "coupled," or "joined" to the second component, or a third component may be "connected," "coupled," or "joined" between the first component and the second component. However, if the specification states that a first component is "directly connected" or "directly joined" to a second component, a third component may not be "connected" or "joined" between the first component and the second component. Similar expressions, for example, "between" and "immediately between" and "adjacent to" and "immediately adjacent to," are also to be construed in this manner.

The terminology used herein is for the purpose of describing particular examples only, and is not intended to limit the disclosure or claims. The singular forms "a," "an," and "the" include the plural forms as well, unless the context clearly indicates otherwise. The terms "comprises," "comprising," "includes," and "including" specify the presence of stated features, numbers, operations, elements, components, or combinations thereof, but do not preclude the presence or addition of one or more other features, numbers, operations, elements, components, or combinations thereof.

Unless otherwise defined, all terms, including technical and scientific terms, used herein have the same meaning as commonly understood by one of ordinary skill in the art to which this disclosure pertains based on an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

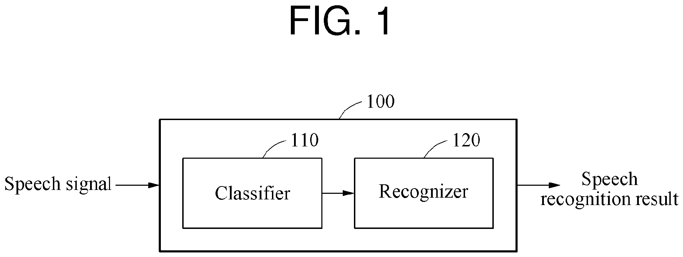

FIG. 1 is a diagram illustrating an example of a speech recognition apparatus.

Referring to FIG. 1, a speech recognition apparatus 100 receives a speech signal. In one example, the speech recognition apparatus 100 may be embodied in the form of a server, and may receive a speech signal of a user from a user device, for example, a mobile terminal, through a network.

The speech recognition apparatus 100 includes a classifier 110 and a recognizer 120.

The classifier 110 determines an utterance type of the user. For example, the classifier 110 determines whether the utterance type of the user is a read speech type or a conversational speech type. The read speech type and the conversational speech type are provided as illustrative examples only, and the utterance type is not limited to these examples.

The classifier 110 determines a decoding condition corresponding to the utterance type. The decoding condition includes at least one decoding parameter to be used by the recognizer 120 to generate a speech recognition result. The decoding condition includes, for example, any one or any combination of any two or more of decoding parameters of a weight of an acoustic model, a weight of a language model, a scaling factor(or a prior scaling factor)(hereinafter called scaling factor), a cepstral mean and variance normalization (CMVN), and a decoding window size. However, these decoding parameters are merely examples, and the decoding parameters are not limited to these examples. For example, in response to the utterance type being determined to be the read speech type, the classifier 110 selects a decoding condition "read speech" from predetermined mapping information. The decoding condition "read speech" includes, for example, a weight of the language model of 2, a scaling factor of 0.7, a weight of the acoustic model of 0.061, a CMVN of $v_1$, and a decoding window size of 200. However, this is merely an example, and the decoding condition "read speech" is not limited to this example.

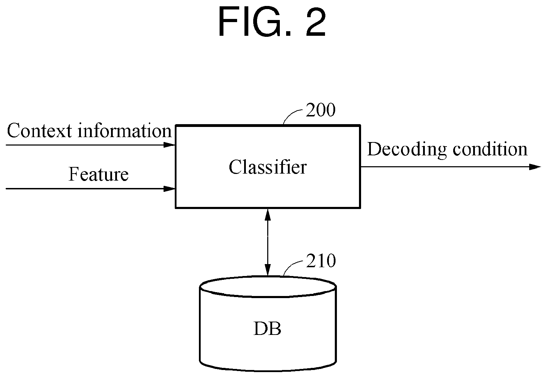

A detailed operation of the classifier 110 will be described hereinafter with reference to FIG. 2.

The recognizer 120 determines a plurality of pieces of candidate text data from the speech signal. For example, in response to the speech signal being input to the recognizer 120, the recognizer 120 determines a phoneme sequence from the speech signal based on the acoustic model, and determines the pieces of candidate text data by recognizing words from the phoneme sequence based on the language model.

The recognizer 120 determines target text data among the pieces of candidate text data by performing decoding based on the determined decoding condition. For example, the recognizer 120 calculates a probability of each of the pieces of candidate text data by applying, to a decoder, the decoding condition "read speech" including the weight of the language model of 2, the scaling factor of 0.7, the weight of the acoustic model of 0.061, the CMVN of $v_1$, and the decoding window size of 200. The recognizer 120 determines the target text data among the pieces of candidate text data based on the calculated probabilities. For example, the recognizer 120 determines, to be the target text data, candidate text data having a maximum probability among the calculated probabilities.

The speech recognition apparatus 100 receives another speech signal. For example, the speech recognition apparatus 100 receives another speech signal, for example, "They um and our entire school was on one campus from kindergarten to uh you know twelfth grade." The classifier 110 determines an utterance type of the other speech signal. When the classifier 110 determines the utterance type of the other speech signal to be the conversational speech type, the classifier 110 selects a decoding condition "conversational speech" from the mapping information. The decoding condition "conversational speech" includes, for example, a weight of the language model of 2.2, a scaling factor of 0.94, a weight of the acoustic model of 0.071, a CMVN of $v_2$, and a decoding window size of 300. However, this is merely one example, and the decoding condition "conversational speech" is not limited to this example.

The recognizer 120 performs decoding based on the decoding condition "conversational speech." Prior to speech recognition performed on the other speech signal, the recognizer 120 applies the decoding condition "read speech" to the decoder. That is, a decoding condition currently applied to the decoder at a time speech recognition begins to be performed on the other speech signal is the decoding condition "read speech." Thus, the recognizer 120 applies the decoding condition "conversational speech" to the decoder to recognize the other speech signal. That is, the decoding condition applied to the decoder changes from the decoding condition "read speech" to the decoding condition "conversational speech." Thus, any one or any combination of any two or more of the weight of the language model, the scaling factor, the weight of the acoustic model, the CMVN, and the decoding window size is adjusted.

The recognizer 120 determines target text data for the other speech signal through the decoding.

In one example, the speech recognition apparatus 100 performs speech recognition based on an optimal decoding condition for an utterance type of a user. Thus, a speech recognition result becomes more accurate, and a word error rate (WER) is improved accordingly.

FIG. 2 is a diagram illustrating an example of a classifier.

A user may utter a voice or speech in various situations or environments. For example, a user utters a voice or speech in an environment in which a large amount of noise or a small amount of noise is present, or utters a voice or speech at a short distance or a long distance from a user device. In addition, users may be of various ages.

Various utterance types may be predefined based on a situation, an environment, an age of a user, a gender of the user, and other factors. The utterance types may be defined in advance, and include, for example, a long-distance conversational speech type, a short-distance read speech type, a short-distance conversational speech type in a noisy place, a long-distance indoor conversational speech type of an elderly user, and a long-distance conversational speech type of a young female user, in addition to the conversational speech type and the read speech type described above.

Referring to FIG. 2, a classifier 200 determines an utterance type of a speech signal among the predefined utterance types. The classifier 200 uses at least one piece of information to determine the utterance type of the speech signal. The information includes, for example, a feature of the speech signal and/or context information. Hereinafter, how the classifier 200 determines an utterance type based on a feature of a speech signal will be described.

In one example, the speech signal is input to the recognizer 120. The recognizer 120 determines or extracts the feature of the speech signal, for example, by analyzing a frequency spectrum of the speech signal, and transmits the feature to the classifier 200. In another example, the speech recognition apparatus 100 includes a feature extractor (not shown) that receives the speech signal, and determines or extracts the feature, for example, by analyzing the frequency spectrum of the speech signal, and transmits the feature to the classifier 200. The classifier 200 determines an utterance type of the speech signal among various utterance types based on a feature of the speech signal. The feature of the speech signal is determined at the speech recognition apparatus by analyzing a frequency spectrum of the speech signal. For example, the classifier 200 compares the feature of the speech signal to a threshold value. In response to the feature of the speech signal being greater than or equal to the threshold value, the classifier 200 determines the utterance type to be the read speech type. Conversely, in response to the feature of the speech signal being less than the threshold value, the classifier 200 determines the utterance type to be the conversational speech type.

In addition, the classifier 200 determines an utterance type of a speech signal based on the context information. The context information includes information on a situation where a user device receives the speech signal from a user. The context information includes, for example, surrounding environment information of the user, user profile information, and application type information of an application executed in the user device. The surrounding environment information includes, for example, user location information, weather information of a location of the user, time information, and noise information, for example, a signal-to-noise ratio (SNR). The user profile information includes various pieces of information on the user, for example, a gender and an age of the user. The application type information includes, for example, information on a type of an application executed to receive or record the speech signal of the user.

In one example, the classifier 200 determines the utterance type of the speech signal based on both the feature of the speech signal and the context information.

When the utterance type is determined, the classifier 200 selects a decoding condition mapped to the determined utterance type of the speech signal by referring to predetermined mapping information. A decoding condition corresponding to each of the utterance types is determined or calculated by a simulation in advance.

As illustrated in the example of FIG. 2, the mapping information is stored in a database (DB) 210. Table 1 below illustrates an example of the mapping information.

Table 1

|  | Weight of language model | Scaling factor | Weight of acoustic model | CMVN | Decoding window size |  |
|---|---|---|---|---|---|---|
| Type$_1$ | $\alpha_1$ | $\beta_1$ | $\gamma_1$ | $v_1$ | $s_1$ | ... |
| Type$_2$ | $\alpha_2$ | $\beta_2$ | $\gamma_2$ | $v_2$ | $s_2$ | ... |
| ... | ... | ... | ... | ... | ... | ... |

(continued)

|  | Weight of language model | Scaling factor | Weight of acoustic model | CMVN | Decoding window size |  |
|---|---|---|---|---|---|---|
| $Type_{10}$ | $\alpha_{10}$ | $\beta_{10}$ | $\gamma_{10}$ | $v_{10}$ | $s_{10}$ | ... |
| ... | ... | ... | ... | ... | ... | ... |
| $Type_{20}$ | $\alpha_{20}$ | $\beta_{20}$ | $\gamma_{20}$ | $v_{20}$ | $s_{20}$ | ... |
| ... | ... | ... | ... | ... | ... | ... |
| $Type_N$ | $\alpha_N$ | $\beta_N$ | $\gamma_N$ | $v_N$ | $s_N$ | ... |
| Default | $\alpha_{default}$ | $\beta_{default}$ | $\gamma_{default}$ | $v_{default}$ | $s_{default}$ | ... |

Referring to Table 1, the weight of the language model, the scaling factor, the weight of the acoustic model, the CMVN, and the decoding window size indicate a decoding condition. The scaling factor may be used to adjust a dependency on a phonetic symbol distribution of training data, and the CMVN may be used to normalize feature vectors extracted from the speech signal. The feature vectors may be generated while the acoustic model is determining a phoneme probability vector based on the speech signal. The decoding window size affects a decoding speed. For example, the decoding speed is slower when using a decoding window size of 300 than when using a decoding window size of 200.

In Table 1, $Type_1$ through $Type_N$ indicate predefined utterance types. For example, $Type_1$ indicates a conversational speech type, $Type_2$ indicates a read speech type, $Type_{10}$ indicates a short-distance conversational speech type in a noisy place, and $Type_{20}$ indicates a long-distance indoor conversational speech type of an elderly user. In addition, in Table 1, a default indicates no utterance type being determined for the speech signal. The classifier 200 selects a default when the utterance type of the speech signal does not correspond to any of the predefined utterance types.

In one example, in a case that a 25-year-old female user utters "Where is a French restaurant?" at a close distance from a user device in an area in Gangnam that is crowded with many people, the speech recognition apparatus receives, from the user device, a speech signal corresponding to the utterance "Where is a French restaurant?" and context information including, for example, a location = Gangnam, a gender of the user = female, an SNR, and an age of the user = 25. The classifier 200 then determines an utterance type of the user to be $Type_{10}$, the short-distance conversational speech type in a noisy place, based on a feature of the speech signal and/or the context information. The classifier 200 selects a decoding condition $\{\alpha_{10}, \beta_{10}, \gamma_{10} v_{10}, s_{10}, ...\}$ mapped to the determined utterance type $Type_{10}$.

In another example, in a case that an elderly male user in his sixties utters "Turn on the TV" at a long distance from a user device while the elderly user is separated from the user device in a house, the speech recognition apparatus receives, from the user device, a speech signal corresponding to the utterance "Turn on the TV" and context information including, for example, a location = indoor, a gender of a user = male, and an age of the user = sixties. The classifier 200 then determines an utterance type of the user to be $Type_{20}$, the long-distance indoor conversational speech type of an elderly user, based on a feature of the speech signal and/or the context information. The classifier 200 selects a decoding condition $\{\alpha_{2o}, \beta_{20}, \gamma_{20}, v_{20}, s_{20}, ...\}$ mapped to the determined utterance type $Type_{20}$.

In another example, in a case that a user has a conversation through a telephone or a mobile phone while a call recording application is being executed, a user device transmits, to the speech recognition apparatus, a speech signal to be used to convert the speech signal to text, which is recorded during the conversation, and/or context information including, for example, application type information of an application = recording. An utterance type of the speech signal generated through the call recording may be the conversational speech type, rather than the read speech type. The classifier 200 then determines the utterance type of the speech signal generated through the call recording to be the conversational speech type, $Type_1$, based on the application type information of the application. The classifier 200 selects a decoding condition $\{\alpha_1, \beta_1, \gamma_1, v_1, s_1, ...\}$ mapped to the determined utterance type $Type_1$. In another example, the classifier 200 may determine a more accurate utterance type of a speech signal by considering another piece of context information, for example, location information, and/or a feature of the speech signal.

The classifier 200 provides or outputs the decoding condition to a recognizer (not shown), such as the recognizer 120 in FIG. 1.

In one example, the speech recognition apparatus performs speech recognition based on a decoding condition most suitable for a current situation or an environment of a user. Thus, a more accurate speech recognition result may be obtained.

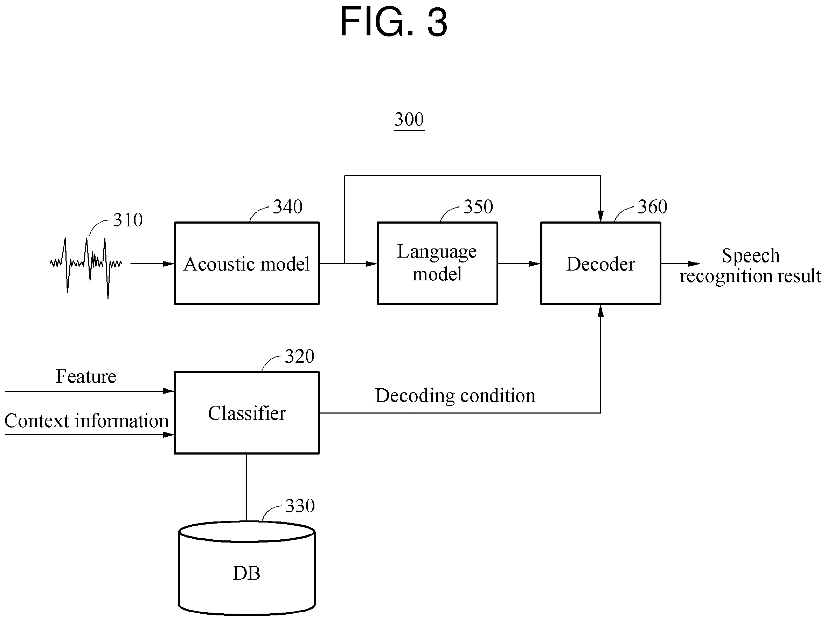

FIG. 3 is a diagram illustrating an example of a speech recognition apparatus.

Referring to FIG. 3, a speech recognition apparatus 300 includes a classifier 320, a DB 330, an acoustic model 340, a language model 350, and a decoder 360.

In the example illustrated in FIG. 3, the speech recognition apparatus 300 receives a speech signal 310 "I'm like everybody you need to read this book right now."

The classifier 320 determines an utterance type of a user, and determines a decoding condition corresponding to the determined utterance type. For a detailed description of the classifier 320, reference may be made to the descriptions provided with reference to FIGS. 1 and 2, and a more detailed and repeated description is omitted here for brevity.

The DB 330 corresponds to the DB 210 described with reference to FIG. 2, and thus a more detailed and repeated description of the DB 330 is omitted here for brevity.

The acoustic model 340 determines a phoneme sequence based on the speech signal 310. The acoustic model 340 is, for example, a hidden Markov model (HMM), a Gaussian mixture model (GMM), a deep neural network (DNN)-based model, or a bidirectional long short-term memory (BLSTM)-based model. However, these are only examples, and the acoustic model 340 is not limited to these examples.

The language model 350 recognizes words based on the phoneme sequence. Through such recognition, candidates for recognition are determined. That is, a plurality of pieces of candidate text data are determined based on the language model 350. The language model 350 is, for example, an n-gram language model or a neural network-based model. However, these are only examples, and the language model 350 is not limited to these examples.

Table 2 illustrates examples of pieces of candidate text data obtained from the speech signal 310 "I'm like everybody you need to read this book right now."

Table 2

| | |
|---|---|
| Candidate 1 | I'm like everybody need to read this book right now |
| Candidate 2 | I'm like everybody meta regensburg right now |
| Candidate 3 | I'm <> everybody need to read the book <> now |

Referring to Table 2, <> in candidate 3 denotes 'unknown.'

The decoder 360 calculates a probability of each of the pieces of candidate text data based on the decoding condition, the acoustic model 340, and the language model 350. The decoder 360 determines, to be target text data, one of the pieces of candidate text data based on the calculated probabilities. For example, the decoder 360 calculates the probability of each of the pieces of candidate text data based on Equation 1 below, and determines the target text data based on the calculated probabilities.

$$\hat{W} = \arg\max_{W \in L} P(O \mid W) \times P(W)^{\alpha} = \arg\max_{W \in L} \frac{P(W \mid O)}{\beta \times P(W)} \times P(W)^{\alpha} \quad (1)$$

In Equation 1, $\hat{W}$ denotes the most likely phoneme sequence, i.e., the phoneme sequence having the highest probability, given the recognition section $O$ of the speech signal among all phoneme sequences $W$ that are elements of the lexicon $L$ of the language model 350, $P(O|W)$ denotes the probability of the recognition section $O$ of the speech signal given the phoneme sequence $W$ calculated by the acoustic model 340, and $P(W)$ denotes the probability of the phoneme sequence $W$ calculated by the language model 350. That is, $P(O|W)$ denotes a probability associated with the phoneme sequence, i.e., a phoneme probability vector, calculated by the acoustic model 340, and $P(W)$ denotes a phoneme sequence probability calculated by the language model 350. The phoneme sequence may be, for example, a word. Furthermore, $\alpha$ denotes a weight of the language model 350, and $\beta$ denotes a scaling factor. Since $P(W)$ is a probability, it has a value $0 < P(W) < 1$. Thus, if the weight $\alpha$ of the language model 350 is greater than 1 and increases, an importance or a dependency of the language model 350 decreases.

For example, in a case that a probability of first candidate text data is calculated to be 0.9, a probability of second candidate text data is calculated to be 0.1, and a probability of third candidate text data is calculated to be 0.6 based on Equation 1, the decoder 360 determines the first candidate text data to be the target text data.

Equation 1 includes only the weight of the language model 350 and the scaling factor. The calculating of a probability of each of the pieces of candidate text data based on Equation 1 and the determining of the target text data by the decoder 360 is provided merely as an example. Thus, the decoder 360 may calculate a probability of each of the pieces of candidate text data based on various decoding parameters in addition to the weight of the language model 350 and the scaling factor, and determine the target text data based on the calculated probabilities.

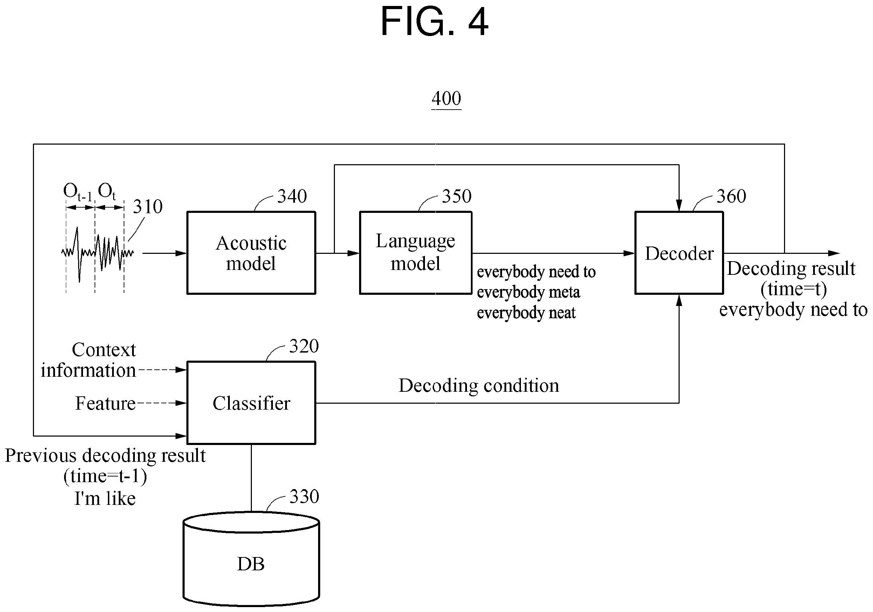

FIG. 4 is a diagram illustrating another example of a speech recognition apparatus.

Referring to FIG. 4, a speech recognition apparatus 400 includes the same elements as the speech recognition apparatus 300 in FIG. 3. However, in the example illustrated in FIG. 4, the classifier 320 determines an utterance type corresponding to a current recognition section $O_t$ of the speech signal 310 based on a previous decoding result. The previous decoding result includes a speech recognition result from a previous recognition section. In the example in FIG. 4, the previous decoding result includes a speech recognition result from a previous recognition section $O_{t-1}$, for example, "I'm like." In another example, the previous decoding result includes the speech recognition result from the previous recognition section $O_{t-1}$ and a speech recognition result from another previous recognition section $O_{t-2}$ (not illustrated in FIG. 4) preceding the previous recognition section $O_{t-1}$.

In the example illustrated in FIG. 4, if an utterance type of the previous decoding result "I'm like" is the read speech type, the classifier 320 determines the utterance type corresponding to the current recognition section $O_t$ to be a read speech type. In another example, the classifier 320 determines an utterance type corresponding to a current recognition section $O_t$ of the speech signal 310 based on the previous decoding result and any one or any combination of a feature of the current recognition section $O_t$ and the context information. For a detailed description of the feature and the context information, reference may be made to the descriptions provided with reference to FIG. 2, and a more detailed and repeated description is omitted here for brevity.

The classifier 320 determines a decoding condition of the current recognition section $O_t$ based on the determined utterance type corresponding to the current recognition section $O_t$.

The acoustic model 340 generates a phoneme probability vector based on the current recognition section $O_t$. The phoneme probability vector is a probability vector associated with a phoneme sequence. The phoneme probability vector may be a real number vector, for example, [0.9, 0.1, 0.005, ...].

The language model 350 recognizes a word based on the phoneme sequence. In addition, the language model 350 predicts or recognizes words connected to the recognized word based on the phoneme probability vector, and calculates a word probability of each of the predicted or recognized words. In the example illustrated in FIG. 4, the language model 350 predicts a word or words connected to a word "everybody" to be "need to," "meta," and "neat" based on a phoneme sequence. The language model 350 calculates a word probability of each of "need to," "meta," and "neat." The word probability of each of "need to," "meta," and "neat" indicates a probability of each of "need to," "meta," and "neat" being connected to the word "everybody." Based on the language model 350, candidate text data, for example, "everybody need to," "everybody meta," and "everybody neat," is determined.

The decoder 360 calculates a probability of each of the pieces of candidate text data based on the phoneme probability vector, the word probability, and the decoding condition of the current recognition section $O_t$. As illustrated in FIG. 4, the decoder 360 calculates a probability of each of the pieces of candidate text data, for example, "everybody need to," "everybody meta," and "everybody neat," by applying the phoneme probability vector, the word probability, and the decoding condition to Equation 1 above. The decoder 360 determines target text data among the pieces of candidate text data based on the calculated probabilities. In the example illustrated in FIG. 4, when the probability of the candidate text data "everybody need to" is calculated to be greatest among the calculated probabilities, the decoder 360 selects the candidate text data "everybody need to" as the target text data.

The classifier 320 determines an utterance type corresponding to subsequent recognition section, and determines a decoding condition corresponding to the determined utterance type. The decoder 360 generates a speech recognition result from the subsequent recognition section by performing decoding on the subsequent recognition section. In a case that the utterance type changes during speech recognition, the classifier 320 dynamically changes the decoding condition, and the decoder 360 performs decoding based on the changed decoding condition.

In another example, the classifier 320 may not determine an utterance type corresponding to a subsequent recognition section. When a user utters a voice or speech of a conversational speech type, it is not very likely that an utterance type changes from the conversational speech type to a read speech type while the user is uttering the voice or speech. That is, an utterance type most likely does not change during a speech signal being continued. When an utterance type corresponding to a recognition section of a speech signal is determined, the speech recognition apparatus 300 may assume that the utterance type corresponding to the recognition section is maintained for a preset period of time, for example, until the speech signal ends. Based on such an assumption, the speech recognition apparatus 300 performs speech recognition on a subsequent recognition section using a decoding condition used to perform speech recognition on the current recognition section. In the example illustrated in FIG. 4, the utterance type corresponding to the current recognition section $O_t$ is determined to be the read speech type, and the speech recognition apparatus 300 performs speech recognition on a subsequent recognition section using a decoding condition "read speech" without determining an utterance type corresponding to the subsequent recognition section.

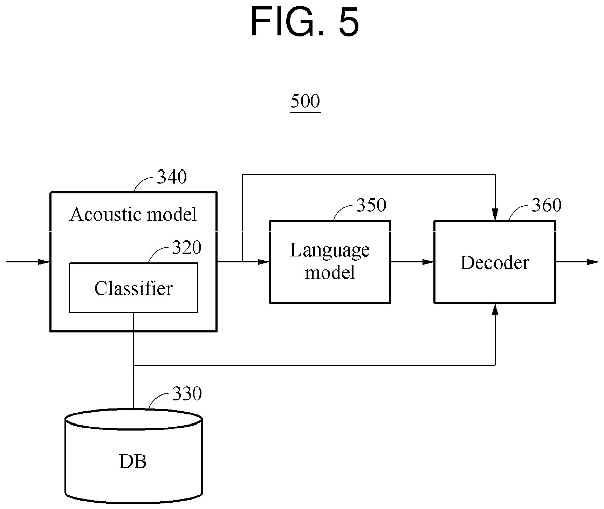

FIG. 5 is a drawing illustrating another example of a speech recognition apparatus.

Referring to FIG. 5, a speech recognition apparatus 500 includes the same elements as the speech recognition apparatus 300 in FIG. 3 and the speech recognition apparatus 400 in FIG. 4. The classifier 320 in the examples in FIGS. 1 through 3 is located outside the acoustic model 340. However, in the example in FIG. 5, the classifier 320 is located inside the acoustic model 340.

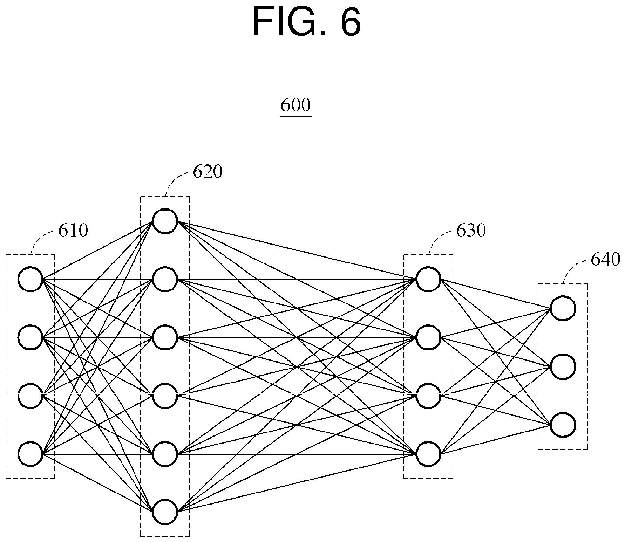

To implement the acoustic model 340 including the classifier 320, a hidden layer and/or an output layer in a neural network of the acoustic model 340 includes at least one classification node, which will be described hereinafter with reference to FIG. 6.

FIG. 6 is a diagram illustrating an example of a neural network.

Referring to FIG. 6, the acoustic model 320 in FIG. 5 is based on a neural network 600. The neural network 600 includes an input layer 610, a plurality of hidden layers 620 and 630, and an output layer 640. At least one classification node is located in any one of the hidden layer 620, the hidden layer 630, and the output layer 640. The classification node is connected to at least one node in a neighboring layer through a connection line. The connection line has a connection weight.

A speech signal is input to the input layer 610. When the input layer 610 receives the speech signal, forward computation is performed. The forward computation is performed in a direction of the input layer 610 → the hidden layers 620 and 630 → the output layer 640, wherein the notation "A→B" means that the direction is from A to B. Through the forward computation, an utterance type of the speech signal and a phoneme probability vector are determined. The utterance type is output from the classification node, and the phoneme probability vector is output from the output layer 640.

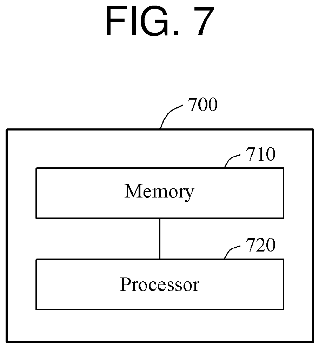

FIG. 7 is a diagram illustrating another example of a speech recognition apparatus.

Referring to FIG. 7, a speech recognition apparatus 700 includes a memory 710 and a processor 720.

The memory 710 stores instructions that are executable by the processor 720.

When the instructions are executed by the processor 720, the processor 720 generates a plurality of pieces of candidate text data from a speech signal of a user, determines a decoding condition corresponding to an utterance type of the user, and determines target text data among the pieces of candidate text data by performing decoding based on the determined decoding condition.

The descriptions provided with reference to FIGS. 1 through 6 are also applicable to the speech recognition apparatus 700 illustrated in FIG. 7, and thus a more detailed and repeated description is omitted here for brevity.

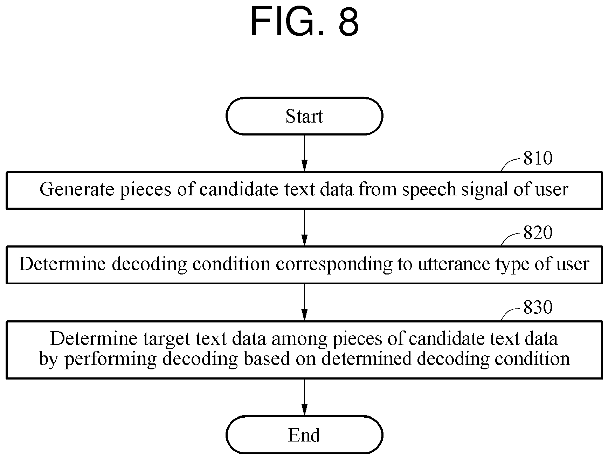

FIG. 8 is a flowchart illustrating an example of a speech recognition method.

A speech recognition method to be described hereinafter may be performed by a speech recognition apparatus, such as any of the speech recognition apparatuses 100, 300, 400, 500, and 700 illustrated in FIGS. 1, 3-5, and 7.

Referring to FIG. 8, in operation 810, the speech recognition apparatus generates a plurality of pieces of candidate text data from a speech signal of a user.

In operation 820, the speech recognition apparatus determines a decoding condition corresponding to an utterance type of the user.

In operation 830, the speech recognition apparatus determines target text data among the pieces of candidate text data by performing decoding based on the determined decoding condition.

The descriptions provided with reference to FIGS. 1 through 7 are also applicable to the speech recognition method illustrated in FIG. 8, and thus a more detailed and repeated description is omitted here for brevity.

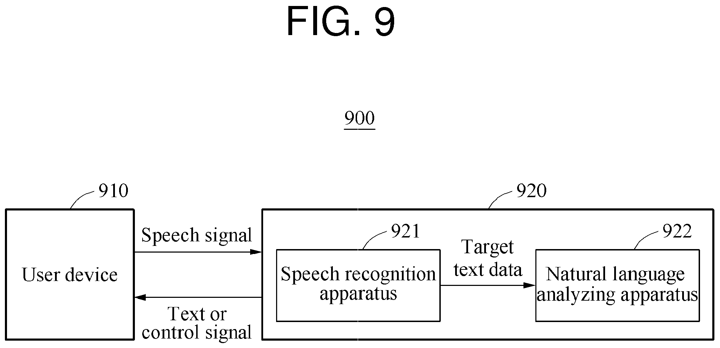

FIG. 9 is a diagram illustrating an example of a natural language processing system including a speech recognition apparatus.

Referring to FIG. 9, a natural language processing system 900 includes a user device 910 and a natural language processing apparatus 920. In one example, the natural language processing apparatus 920 may be embodied in the form of a server.

The user device 910 receives a voice or speech of a user. The user device 910 may capture the voice or speech. The user device 910 generates a speech signal by pre-processing and/or compressing the voice or speech. The user device 910 transmits the speech signal to the natural language processing apparatus 920.

The user device 910 is, for example, a mobile terminal such as a wearable device, a smartphone, a tablet personal computer (PC), or a home agent configured to control a smart home system. However, these are merely examples, and the user device 910 is not limited to these examples.

The natural language processing apparatus 920 includes a speech recognition apparatus 921 and a natural language analyzing apparatus 922. The speech recognition apparatus 921 may also be referred to as a speech recognition engine, and the natural language analyzing apparatus 922 may also be referred to as a natural language understanding (NLU) engine.

The speech recognition apparatus 921 determines target text data corresponding to the speech signal. The speech recognition apparatus 921 may be any of the speech recognition apparatuses 100, 300, 400, 500, and 700 illustrated in FIGS. 1, 3-5, and 7 and may implement the speech recognition method illustrated in FIG. 8, and thus a more detailed and repeated description of the speech recognition apparatus 921 is omitted here for brevity.

The natural language analyzing apparatus 922 analyzes the target text data. The natural language analyzing apparatus 922 performs, for example, any one or any combination of any two or more of a morpheme analysis, a syntax analysis, a semantic analysis, and a discourse analysis of the target text data. The natural language analyzing apparatus 922 determines intent information of the target text data through such analyses. For example, in a case that target text data corresponding to "Turn on the TV" is determined, the natural language analyzing apparatus 922 analyzes the target text data corresponding to "Turn on the TV" and determines intent information indicating that a user desires to turn on the TV. In one example, the natural language analyzing apparatus 922 corrects an erroneous word or a grammatical error in the target text data.

The natural language analyzing apparatus 922 generates a control signal and/or text data corresponding to the intent information of the target text data. The natural language processing apparatus 920 transmits, to the user device 910, the control signal and/or the text data. The user device 910 operates based on the control signal or displays the text data on a display. For example, in a case that the user device 910 receives a control signal corresponding to the intent information indicating that the user desires to turn on the TV, the user device 910 turns on the TV.

The speech recognition apparatus 100, the classifier 110, and the recognizer 120 in FIG. 1, the classifier 200 and the DB 210 in FIG. 2, the speech recognition apparatus 300 in FIG. 3, the classifier 320, the DB 330, the acoustic model 340, the language model 350, and the decoder 360 in FIGS. 3-5, the speech recognition apparatus 400 in FIG. 4, the speech recognition apparatus 500 in FIG. 5, the neural network 600, the input layer 610, the hidden layers 620 and 630, and the output layer 640 in FIG. 6, the speech recognition apparatus 700, the memory 710, and the processor 720 in FIG. 7, and the natural language processing system 900, the user device 910, the natural language processing apparatus 920, the speech recognition apparatus 921, and the natural language analyzing apparatus 922 in FIG. 9 that perform the operations described in this application are implemented by hardware components configured to perform the operations described in this application that are performed by the hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The method illustrated in FIG. 8 that performs the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. A speech recognition method comprising:

   generating pieces of candidate text data from a speech signal of a user;
   determining a decoding condition corresponding to an utterance type of the user; and
   determining target text data among the pieces of candidate text data by performing decoding based on the determined decoding condition.

2. The speech recognition method of claim 1, further comprising determining the utterance type based on any one or any combination of any two or more of a feature of the speech signal, context information, and a speech recognition result from a recognition section of the speech signal;
   wherein the context information preferably comprises any one or any combination of any two or more of user location information, user profile information, and application type information of an application executed in a user device.

3. The speech recognition method of any one of the previous claims, wherein the determining of the decoding condition comprises selecting, in response to the utterance type being determined, a decoding condition mapped to the determined utterance type from mapping information comprising utterance types and corresponding decoding conditions respectively mapped to the utterance types; and/or
   wherein the decoding condition comprises any one or any combination of any two or more of a weight of an acoustic model, a weight of a language model, a scaling factor associated with a dependency on a phonetic symbol distribution, a cepstral mean and variance normalization, CMVN, and a decoding window size.

4. The speech recognition method of any one of the previous claims, wherein the determining of the target text data comprises:

   changing a current decoding condition to the determined decoding condition;
   calculating a probability of each of the pieces of candidate text data based on the determined decoding condition; and
   determining the target text data among the pieces of candidate text data based on the calculated probabilities; and/or

wherein the determining of the target text data comprises:

adjusting either one or both of a weight of an acoustic model and a weight of a language model based on the determined decoding condition; and
determining the target text data by performing the decoding based on either one or both of the weight of the acoustic model and the weight of the language model.

**5.** The speech recognition method of any one of the previous claims, wherein the generating of the pieces of candidate text data comprises:

determining a phoneme sequence from the speech signal based on an acoustic model;
recognizing words from the determined phoneme sequence based on a language model;
and
generating the pieces of candidate text data based on the recognized words;

wherein the acoustic model preferably comprises a classifier configured to determine the utterance type based on a feature of the speech signal.

**6.** A speech recognition method comprising:

receiving a speech signal of a user;
determining an utterance type of the user based on the speech signal; and
recognizing text data from the speech signal based on predetermined information corresponding to the determined utterance type.

**7.** The speech recognition method of claim 6, further comprising selecting the predetermined information from mapping information comprising utterance types and corresponding predetermined information respectively matched to the utterance types.

**8.** The speech recognition method of claim 6 or 7, wherein the predetermined information comprises at least one decoding parameter; and
the recognizing of the text data comprises:

generating pieces of candidate text data from the speech signal;
performing decoding on the pieces of candidate text data based on the at least one decoding parameter corresponding to the determined utterance type; and
selecting one of the pieces of candidate text data as the recognized text based on results of the decoding;

wherein the generating of the pieces of candidate text data preferably comprises:

generating a phoneme sequence from the speech signal based on an acoustic model; and
generating the pieces of candidate text data by recognizing words from the phoneme sequence based on a language model;

wherein the at least one decoding parameter preferably comprises any one or any combination of any two or more of a weight of the acoustic model, a weight of the language model, a scaling factor associated with a dependency on a phonetic symbol distribution, a cepstral mean and variance normalization, CMVN, and a decoding window size; and
wherein the acoustic model preferably generates a phoneme probability vector;

the language model preferably generates a word probability; and
the performing of the decoding preferably comprises performing the decoding on the pieces of candidate text data based on the phoneme probability vector, the word probability, and the at least one decoding parameter corresponding to the determined utterance type.

**9.** The speech recognition method of any one of claims 6-8, wherein the recognizing of the text data comprises recognizing text data from a current recognition section of the speech signal based on the predetermined information corresponding to the determined utterance type; and

the determining of the utterance type of the user comprises determining the utterance type of the user based on text data previously recognized from a previous recognition section of the speech signal.

10. A non-transitory computer-readable medium storing instructions that, when executed by a processor, cause the processor to perform the method of any one of the previous claims.

11. A speech recognition apparatus comprising:

a processor; and
a memory configured to store instructions executable by the processor;
wherein, in response to executing the instructions, the processor is configured to:

generate pieces of candidate text data from a speech signal of a user,
determine a decoding condition corresponding to an utterance type of the user, and
determine target text data among the pieces of candidate text data by performing decoding based on the determined decoding condition.

12. The speech recognition apparatus of claim 11, wherein the processor is further configured to determine the utterance type based on any one or any combination of any two or more of a feature of the speech signal, context information, and a speech recognition result from a recognition section of the speech signal;
wherein the context information preferably comprises any one or any combination of any two or more of user location information, user profile information, and application type information of an application executed in a user device.

13. The speech recognition apparatus of claim 11 or 12, wherein the processor is further configured to select, in response to the utterance type being determined, a decoding condition mapped to the determined utterance type from mapping information comprising utterance types and corresponding decoding conditions respectively mapped to the utterance types; and/or
wherein the decoding condition comprises any one or any combination of any two or more of a weight of an acoustic model, a weight of a language model, a scaling factor associated with a dependency on a phonetic symbol distribution, a cepstral mean and variance normalization, CMVN, and a decoding window size.

14. The speech recognition apparatus of any one of claims 11-13, wherein the processor is further configured to:

change a current decoding condition to the determined decoding condition,
calculate a probability of each of the pieces of candidate text data based on the determined decoding condition, and
determine the target text data among the pieces of candidate text data based on the calculated probabilities; and/or

wherein the processor is further configured to:

adjust either one or both of a weight of an acoustic model and a weight of a language model based on the determined decoding condition; and
determine the target text data by performing the decoding based on either one or both of the weight of the acoustic model and the weight of the language model.

15. The speech recognition apparatus of any one of claims 11-14, wherein the processor is further configured to:

determine a phoneme sequence from the speech signal based on an acoustic model,
recognize words from the phoneme sequence based on a language model, and
generate the pieces of candidate text data based on the recognized words;

wherein the acoustic model preferably comprises a classifier configured to determine the utterance type based on a feature of the speech signal.

# FIG. 1

Speech signal ⟶ | Classifier (110) | ⟶ | Recognizer (120) | ⟶ Speech recognition result

(100)

# FIG. 2

Context information →

Feature →

Classifier ⟋200

→ Decoding condition

DB ⟋210

# FIG. 3

300

310 → Acoustic model (340) → Language model (350) → Decoder (360) → Speech recognition result

Feature → Classifier (320)
Context information → Classifier (320)

Classifier → Decoding condition → Decoder

Classifier — DB (330)

# FIG. 4

<u>400</u>

# FIG. 5

<u>500</u>

# FIG. 6

# FIG. 7

# FIG. 8

```
                    ┌─────────────┐
                    │    Start    │
                    └──────┬──────┘
                           │              ┌─810
   ┌───────────────────────▼──────────────────────────────┐
   │ Generate pieces of candidate text data from speech signal of user │
   └───────────────────────┬──────────────────────────────┘
                           │              ┌─820
   ┌───────────────────────▼──────────────────────────────┐
   │ Determine decoding condition corresponding to utterance type of user │
   └───────────────────────┬──────────────────────────────┘
                           │              ┌─830
   ┌───────────────────────▼──────────────────────────────┐
   │ Determine target text data among pieces of candidate text data │
   │ by performing decoding based on determined decoding condition │
   └───────────────────────┬──────────────────────────────┘
                           │
                    ┌──────▼──────┐
                    │    End      │
                    └─────────────┘
```

# FIG. 9

900

EP 3 355 303 A1

Europäisches Patentamt

European Patent Office

Office européen des brevets

# EUROPEAN SEARCH REPORT

Application Number

EP 17 20 6914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/151253 A1 (BUSHEY ROBERT R [US] ET AL) 13 June 2013 (2013-06-13)<br>* figure 1 *<br>* paragraph [0016] - paragraph [0019] *<br>----- | 1-15 | INV.<br>G10L15/08 |
| A | US 2009/106028 A1 (DHANAKSHIRUR GIRISH [US] ET AL) 23 April 2009 (2009-04-23)<br>* paragraph [0026] - paragraph [0029] *<br>----- | 1-15 | |
| A | US 8 600 746 B1 (LEI XIN [US] ET AL) 3 December 2013 (2013-12-03)<br>* figure 1 *<br>* abstract *<br>----- | 1-15 | |

TECHNICAL FIELDS SEARCHED (IPC)

G10L

The present search report has been drawn up for all claims

| Place of search | Date of completion of the search | Examiner |
|---|---|---|
| The Hague | 18 May 2018 | Ziegler, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 20 6914

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2018

| Patent document cited in search report | | Publication date | Patent family member(s) | | Publication date |
|---|---|---|---|---|---|
| US 2013151253 | A1 | 13-06-2013 | US | 2006036437 A1 | 16-02-2006 |
| | | | US | 2009287484 A1 | 19-11-2009 |
| | | | US | 2013151253 A1 | 13-06-2013 |
| | | | US | 2014236599 A1 | 21-08-2014 |
| US 2009106028 | A1 | 23-04-2009 | NONE | | |
| US 8600746 | B1 | 03-12-2013 | NONE | | |

EPO FORM P0459

For more details about this annex : see Official Journal of the European Patent Office, No. 12/82